# EUROPÄISCHE PATENTSCHRIFT

(11) **EP 0 518 089 B1**
(45) Veröffentlichungstag und Bekanntmachung des Hinweises auf die Patenterteilung: **20.03.1996**
(21) Anmeldenummer: 92108530.4
(22) Anmeldetag: 20.05.1992
(51) Int. Cl.: B22C 1/00, B22D 29/00, C04B 35/14

(54) **Verfahren zur Herstellung von chemisch entfernbaren keramischen Giessformen**
Process for the production of chemically degradable ceramic moulds
Procédé pour la fabrication de moules céramiques dégradables chimiquement

(30) Priorität: 14.06.1991 DE 4120105
(43) Veröffentlichungstag der Anmeldung: 16.12.1992
(73) Patentinhaber: UNIVERSAL QUARZGUT SCHMELZE GmbH, D-13089 Berlin (DE)
(72) Erfinder: Reinhardt, Helmut, 0-4020 Halle (DE); Werner, Wolfgang, 0-4020 Halle (DE); Schneider, Steffen, 0-1140 Berlin (DE)
(74) Vertreter: Kruspig, Volkmar, Dipl.-Ing.

(56) Entgegenhaltungen:
- EP-A- 0 056 662
- EP-A- 0 179 649
- GB-A- 1 211 824
- FONDERIE-FONDEUR D'AUJOURD'HUI Nr. 93, März 1990, PARIS, FR Seiten 20 - 25; ROCHIER: 'Récyclage des sables de moulage-noyautage'

## Beschreibung

Die Erfindung bezieht sich auf ein Verfahren zur Herstellung von chemisch entfernbaren keramischen Gießformen, gemäß Oberbegriff des Patentanspruches 1 insbesondere für deren Verwendung bei der maßgenauen gußtechnischen Realisierung komplizierter strömungsführender Teile wie Lauf- und Leiträder und Propellerflügel, wobei die Formen eine hohe Wärmebeständigkeit sowie einen geringen Schwund während des Brennvorganges aufweisen, eine geringe Rißbildung und ein geringes spezifisches Gewicht sichern, eine teilweise Wiederverwendbarkeit als Mehrfachform oder durch Recycling möglich ist.

Es wunde bereits vorgeschlagen keramische Gießformen wie folgt herzustellen. Zunächst wird eine keramische Mischung aus Fernerfeststoff und Binderlösung vorbereitet und Härter untergemischt, wobei die so entstandene Mischung in die Modelleinrichtung eingebracht wird. Gegebenfalls wird zum vollständigen Ausfüllen mit der keramischen Mischung bei komplizierten Gußteilen, mit z.B. rotationssymmetrischer Gestalt die Form mittels Schleudertisch einer Zentrifugalkraftwirkung ausgesetzt. Nach einem Trocknungs- und Aushärteprozeß wird die Keramikform ausgepackt. Die grüne Keramikform wird dann einer Flammbehandlung und einem anschließendem Brennen im Brennofen bei Temperaturen über 850 Grad Celsius ausgesetzt. Die so entstandene Form kann dann in bekannter Weise zum Metallgießen verwendet werden. Wie bereits dargelegt, sind die wesentlichen Bestandteile der Formmischung der keramischen Formen die Bindemittel und die verwendeten Feuerfeststoffe. Grundstoff der Binderflüssigkeit ist Ethylsilikat, welchem denaturierter Alkohol als Löser und Salzsäure als Katalysator beigemengt werden. Als Feuerfeststoff wird Mullit, ein hochfeuer- und säurefestes Aluminiumsilikat verwendet. Der Mullitgehalt des Produktes beträgt mindestens 90%, wobei der Rest aus Korund und Cristobalit besteht. Der Gehalt an Al₂O₃ liegt bei mindestens 69%. Insbesondere auf Grund der notwendigen Beständigkeit der somit erstellten Form, ergeben sich beim Entfernen der Kerne Probleme dahingehend, daß ein Heraustrennen bzw. Entfernen des Formkerns nur mittels starker mechanischer Krafteinwirkung möglich ist. Im Allgemeinen wird hiefür das arbeitszeitintensive Sandstrahlverfahren benutzt. Insbesondere bei kompliziert strukturierten Formen ist es nicht möglich, sämtliche Formkernreste vollständig zu entfernen, so daß mit Qualitätsverlusten der auf diese Weise hergestellten Produkte, beispielsweise der Verringerung des Wirkungsgrades bei geschlossenen Laufrädern, zu rechnen ist. Bedingt durch die Granulometrie des verwendeten bekannten Feuerfeststoffes sind ebenfalls nur begrenzte Eigenschaften bezogen auf die Gußoberfläche zu erhalten. Problematisch ist weiterhin der durch die Materialwahl bedingte Schwund der Form, welcher durch Überdimensionierung nur unvollständig ausgeglichen werden kann.

Aus der EP 0 056 662 A3 ist eine extrudierbare Mischung zur Herstellung von Gießformen oder Gießkernen vorbekannt, bei der ein Feuerfestmaterial amorphes SiO₂ mit einer Korngröße zwischen 1 und 150 µm enthält. Neben organischem Bindemittel wird der Formmischung ein Mineralizer zugegeben, welcher deritrifierende Ionen enthält um ein Auskristallisieren der Formmischung zu erreichen. Die Form selbst wird also durch Übergang des amorphen Silizium in den kristallinen Zustand gebildet. Kristallisiertes SiO₂ kann jedoch nicht ohne weiteres zur erneuten Aufbereitung einer Formmischung verwendet werden.

Aus der EP 0 179 649 A3 ist ein Keramikmaterial zur Herstellung von Gießformen bekannt, welches amorphes Silizium und im Silizium homogen verteiltes Cristobalit aufweist. Neben dem amorphen Silizium enthält der Feuerfestwerkstoff bzw. die Formmischung bis zu 10 Gewichtsprozent eines Pulvers aus seltenen Erden oder Graphit und/oder Kohlenstoffpulver oder aber auch bis zu 15 Gewichtsprozent Yttriumoxidpulver. Durch eine Zugabe von bis zu 0,2 Gewichtsprozent eines alkalischen Metalles wird mindestens eine Oberflächenkristallisation der erhaltenen Form zur Sicherung einer entsprechenden Stabilität auch bei höheren Temperaturen erreicht.

Es besteht daher die Aufgabe der Erfindung, ein Verfahren zur Herstellung von chemisch entfernbaren keramischen Gießformen, insbesondere für die maßgenaue Realisierung komplizierter strömungsführender Teile wie Lauf- und Leiträder und Propellerflügel anzugeben, wobei die Formen eine hohe Wärmebeständigkeit sowie einen geringen Schwund während des Brennvorganges aufweisen, eine geringe Rißbildung und ein geringes spezifisches Gewicht bei guter Gußoberfläche gesichert ist und eine teilweise Wiederverwendbarkeit als Mehrfachform oder durch Recycling möglich ist.

Die Lösung der Aufgabe der Erfindung erfolgt mit den im Patentanspruch 1 offenbarten Merkmalen. Eine bevorzugte Ausführungsform ist im abhängigen Anspruch 2 offenbart.

Erfindungsgemäß wird als Feuerfeststoff bei der Aufbereitung der keramischen Formmischung ein Quarzgutmehl bestehend aus mindestens 99% Siliziumdioxid mit einer Korngröße von ca. 60 µm bei einem Masseanteil von 30 bis 55% verwendet. Der Anteil an kristallinem SiO₂ ist hierbei kleiner 5%. Der Anteil von Al₂0₃ in dem als Feuerfeststoff verwendeten Quarzgutmehl ist kleiner/gleich 0,1 %.

Die Erfindung soll anhand eines Ausführungsbeispieles näher erläutert werden.

Zunächst erfolgt die Aufbereitung der keramischen Masse durch Mischen des speziellen erfindungsgemäßen Quarzgutmehles mit der Hydrolyseflüssigkeit unter Zugabe von Härter. Diese Masse wird dann in die metallische Form gegeben und härtet bei Raumtemperatur aus, so daß nach einer definierten Verweildauer die bereits relativ feste grüne keramische Form entnommen werden kann und abgeflammt wird. Nach dem Abflammen des Unterkastens, des Formkerns und des Formdeckels wird die Form im Brennofen einer Temperaturbehandlung von ca. 850 bis 1000 Grad Celsius ausgesetzt. Die somit erhaltene Form zeichnet sich durch eine äußerst glatte Oberfläche und durch einen geringen Schwund mit Werten unter einem Prozent aus. Das Kernmaterial kann nach dem Metallgußprozeß in einfacher, unaufwendiger Weise in einer geringprozentigen Natronlauge aufgelöst und damit entfernt werden. Die Keramikform ist an der Oberfläche fest, hart und glatt, im Innern jedoch porös und weniger dicht, so daß ein geringes spezifisches Gewicht und eine leichte Handhabbarkeit der Form bei gleichzeitig hoher Gesamtstabilität gegeben ist.

Das bereits verwendete Formmaterial kann durch Zermahlen unter Beachtung einer definierten Sieblinie aufbereitet und im Verhältnis von ca. 50% aufbereitetes Material zu 50% des erfindungsgemäßen Quarzgutmehls wiederverwendet werden. Die derart unter Verwendung eines Feuerfeststoffes aus Quarzgutmehl mit größer 99% SiO₂-Gehalt hergestellten Unterkästen sind auf Grund ihrer Eigenschaften mehrfach verwendbar. Durch die erreichte Oberflächengüte der Gußteile (Ra = 3 bis 6 µm) sind aufwendige Nacharbeiten wie bei herkömmlichen Formen erforderlich, vermeidbar.

Bedingt durch den Prozeß des chemischen Auflösens des Formkerns sind beispielsweise Schaufelräder mit einem Durchmesser von 350 mm bei einer Kanalbreite von 6 mm problemlos in hoher Qualität herstellbar. Die zum Auflösen verwendete Lösung ist eine 10 bis 30-prozentige Natronlauge.

Die Granulometrie des erfindungsgemäßen Feuerfeststoffes ist beispielsweise wie folgt zu wählen:

| | | |
|---|---|---|
| Korngröße in Prozent bei | 900 µm | max. 0,3 |
| | 63 µm | 30 - 55 |
| | 20 µm | 60 - 80 |
| | 15 µm | 75 - 90 |
| | 5 µm | 85 - 95 |
| | 2 µm | 92 - 100 |

Der Anteil an SiO₂ beträgt hierbei minimal 99,6 %, der Anteil an Al₂O₃ liegt bei maximal 0,1 %.

## Patentansprüche

1. Verfahren zur Herstellung von chemisch entfernbaren keramischen Gießformen oder Gießkernen mit einem Quarzgutmehl enthaltenden Feuerfeststoff,
**dadurch gekennzeichnet,**
daß bei der Aufbereitung der keramischen Formmischung und Formherstellung das als Feuerfeststoff verwendete Quarzgutmehl aus mindestens 99% Siliziumdioxid besteht, wobei der kristalline Siliziumdioxidanteil kleiner 5% sowie der Anteil von Al₂O₃ im Quarzgutmehl kleiner/gleich 0,1% ist und daß das Siliziumdioxid eine Korngröße von im wesentlichen 60 µm bei einem Masseanteil in dieser Korngröße von 30 bis 55% aufweist.

2. Verfahren nach Anspruch 1,
**dadurch gekennzeichnet,**
daß bei der Aufbereitung der keramischen Formmischung bis zu 50% des verwendeten Quarzgutmehls durch ein in einem Mahlprozeß aufbereitetes, bereits gebranntes Quarzgutmehl ersetzt und damit wiederverwendet wird.

## Claims

1. A process for producing chemically removable ceramic cast moulds or cast cores with a refractory containing translucent fused quartz powder,
characterized in that
in preparing the ceramic mould mixture and in producing the mould the translucent fused quartz powder used as refractory consists of at least 99% silicon dioxide, the crystalline portion of silicon dioxide being less than 5% and the portion of Al₂O₃ in the translucent fused quartz powder being less than or equal to 0,1% and that the silicon dioxide has a grain size of essentially 60 µm with a portion of 30 to 55% by weight within this grain size.

2. The process according to claim 1,
characterized in that
in preparing the ceramic mould mixture up to 50% of the used translucent fused quartz powder is replaced by an already burned translucent fused quartz powder which is prepared in a grinding process and consequently used again.

## Revendications

1. Méthode pour la production des moules à fondre ou des coulées céramiques et chimiquement démontables avec une matière réfractaire contenant de la poudre de silice vitreuse,
characterisé en ce que
la poudre silice vitreuse utilisée comme une matière réfractaire se compose de dioxyde de silicium au moins à 99% chez la préparation du mélangé de moulage céramique et la production à moulage, la part de dioxyde de silicium crystalline étant moins que 5% et la part de Al2O3 dans la poudre silice vitreuse étant égale ou moins que 0.1% et que le dioxyde de silicium comporte une grosseur des cristaux en substance de 60 µm chez une part de matière de 30 à 55% avec cette grosseur des cristaux.

2. Méthode selon revendication 1,
characterisé en ce que
jusqu'à 50% de la poudre de silice vitreuse utilisée est replacée chez la préparation du mélangé de moulage céramique par une poudre de silice vitreuse préparée dans une procédure de broyage et déjà brulée et qui est ainsi réutilisée.
